Europäisches Patentamt

European Patent Office

Office européen des brevets

(19)

(11) Veröffentlichungsnummer: **0 133 157**
A2

# (12) EUROPÄISCHE PATENTANMELDUNG

(21) Anmeldenummer: **84810319.8**

(22) Anmeldetag: **28.06.84**

(51) Int. Cl.⁴: **F 16 F 9/34**
**F 16 F 9/06**

(30) Priorität: **20.07.83 CH 3988/83**

(43) Veröffentlichungstag der Anmeldung:
**13.02.85 Patentblatt 85/7**

(84) Benannte Vertragsstaaten:
**AT BE CH DE FR GB IT LI LU NL SE**

(71) Anmelder: **SCHWEIZERISCHE ALUMINIUM AG**

**CH-3965 Chippis(CH)**

(72) Erfinder: **Hardt, Jean**
**Neusatzstrasse**
**CH-8463 Benken(CH)**

(72) Erfinder: **Oertle, Max**
**Rheinauerweg 217**
**CH-8447 Dachsen(CH)**

(54) Stossdämpfer.

(57) Bei einem Stossdämpfer mit an einer Kolbenstange (2) in einer Dämpferhülse (1) führbaren Kolben (19) sind zwei von ihm gebildete und mit Flüssigkeit gefüllte Arbeitsräume (4a, 4b) in der Dämpferhülse über Ventile, Drosselbohrungen od.dgl. verbunden, wobei die Kolbenstange (2) einen Ausgleichsraum (21) aufweist, der mit Druck beaufschlagbar ist.

Zwischen dem Ausgleichsraum (21) und dem unteren Arbeitsraum (4a) soll eine Ueberströmventil (23, 60) angeordnet sein, welches in einer Einschnürung (26) der Kolbenstange (2) oder in einem Kolbenkörper (62) des Kolbens (61) angeordnet ist.

Weiterhin ist in der Kolbenstange (2, 2a) ein Entlüftungsventil (24) angeordnet und diesem oberhalb des Arbeitsraumes (4b) eine Ringkammer (14) zur Aufnahme von in die Arbeitsräume (4a bzw. 4b) gelangtem Druckgas zugeordnet.

Am Boden (3) der Dämpferhülse (1) ragt ein Dorn (5) in den Arbeitsraum (4a) ein, welcher in Endlage der Kolbenstange (2) den Ausgleichsraum (21) verschliesst.

Der Ausgleichsraum (21) wird jenseits der Einschnürungen (26) von einem Füll- und Regelventil (22) verschlossen.

Fig 1

EP 0 133 157 A2

Stossdämpfer

———————

Die Erfindung betrifft einen Stossdämpfer mit an einer Kolbenstange in einer Dämpferhülse führbaren Kolben, welcher 2 von ihm gebildete und mit Flüssigkeit gefüllte Arbeitsräume in der Dämpferhülse über Ventile, Drosselbohrungen od.dgl. verbindet, wobei die Kolbenstange einen Ausgleichsraum aufweist, der mit Druck beaufschlagbar ist.

Ein derartiger hydropneumatischer Stossdämpfer ist beispielsweise aus der DE-AS 21 65 435 bekannt. Dort befindet sich eine teilweise mit Gas gefüllte Kolbenstange in einer mit Flüssigkeit gefüllten Dämpferhülse. Die Kolbenstange wird in der Dämpferhülse von einem Kolben umgeben, welcher Ventileinrichtungen zum Ausgleich des Druckes zwischen zwei Arbeitsräumen aufweist. Zum Inneren der Kolbenstange hin ist der Kolben ebenfalls weit geöffnet, so dass die Flüssigkeit ungehindert in die Kolbenstange eintreten kann. Um hier eine Dämpfungswirkung zu erzielen ist ein sehr hoher Gasdruck (nämlich 30 bis 35 bar) erforderlich. Sollten Gasverluste auftreten, so ist keine Einrichtung zum Nachfüllen vorgesehen. Weiterhin weist der Stossdämpfer nach der DE-AS 21 65 435 ein Entlüftungsventil auf, welches jedoch immer dann betätigt wird, wenn eine bestimmte Druckdifferenz zwischen dem Arbeitsraum und dem Kolbenstangeninnenraum herrscht. In der Regel fliesst also durch dieses Ventil in den meisten Fällen Flüssigkeit aus dem Arbeitsraum in den Kolbeninnenraum. Dadurch, dass dieses Ventil sehr häufig betätigt wird, unterliegt es einem hohen Verschleiss.

Ein weiteres Ausführungsbeispiel eines hydropneumatischen Stossdämpfers zeigt die US-PS 4,334,600. Sie enthält Einrichtungen zum Einfüllen sowohl von Flüssigkeit als auch von Gas, zeigt jedoch nur eine geringe Anzahl an Dämpfungsventilen. Ebenso fehlt bei ihr die Möglichkeit einer Entlüftung des Arbeitsraumes.

Der Erfinder hat sich zum Ziel gesetzt, einen hydropneumatischen Stossdämpfer zu entwickeln, welcher hervorragende Dämpfungseigenschaften aufweist, dessen Arbeitsraum auf einfache Weise zu entlüften und der sehr einfach mit Druck zu beaufschlagen ist. Dabei soll das Gewicht des Stossdämpfers möglichst gering gehalten und nur wenige Einbauteile verwendet werden. Ebenso soll er beim Transport sehr klein gehalten werden und möglichst geringe Vermischung von Gas und Flüssigkeit erfahren. Durch eine verbesserte Ausnützung des vorbestimmten Bauraumes soll er erweitert, d.h. für eine Vielzahl unterschiedlich grosser und schwerer Wagentypen sowohl als Stossdämpfer als auch als Federbeineinsatz anwendbar sein.

Zur Lösung dieser Aufgabe führt ein Stossdämpfer der oben genannten Art, bei dem zwischen dem Ausgleichsraum und dem unteren Arbeitsraum ein Ueberströmventil angeordnet ist. Dieses Ueberströmventil dient in besonderem Masse der Dämpfung in der Druckphase. Es soll insbesondere bei starken Stössen ansprechen. Bei dieser Ausgestaltung genügt eine Beaufschlagung des Ausgleichsraumes der Kolbenstange mit einem Gasdruck von etwa 5 bar.

Bei einem 1. Ausführungsbeispiel soll dieses Ueberströmventil in einer Einschnürung der Kolbenstange angeordnet sein.

Dabei weist es eine den Ausgleichsraum abschliessende, festliegende Lochplatte auf, gegen die sich jenseits des Ausgleichsraumes ein 1. Kraftspeicher abstützt, dem eine Ventilplatte mit Bohrungen sowie seitlichen Randöffnungen bewegbar anliegt. Die seitlichen Randöffnungen haben insbesondere die Funktion, dass bei geringer Kolbengeschwindigkeit nur der im Ausgleichsraum herrschende Gasdruck der Dämpferkraft entgegenwirkt.

Diese Bohrungen sind durch eine Scheibe in Ruhelage abgedeckt, wobei jedoch die Scheibe gegen die Kraft eines 2. Kraftspeichers von den Oeffnungen abgehoben werden kann. Erfindungsgemäss soll der 1. Kraftspeicher zwischen Lochplatte und Ventilplatte einer hohen Druckwiderstand bieten. Gleitet die Kolbenstange in die Dämpferhülse hinein, so versucht Flüssigkeit infolge der Volumenverdrängung durch die Kolbenstange in den Ausgleichsraum zu gelangen. Dies kann nur an der Ventilplatte vorbei geschehen. Da diese Ventilplatte von dem sehr kräftigen 1. Kraftspeicher an die Innenwand der Kolbenstange angepresst wird, bedarf es eines kräftigen Stosses, um die Ventilplatte von der Innenwandung abzuheben. Beim Ausfedern dagegen werden die Oeffnungen in der Ventilplatte, durch welche die Flüssigkeit zurückfliessen muss, lediglich durch eine relativ schwach gestützte Scheibe abgedeckt.

Eine weitere Ausführungsform des Ueberströmventils sieht vor, dass dieses in einem Kolbenkörper des Kolbens angeordnet ist. Hierzu weist erfindungsgemäss der Kolbenkörper eine Innenkammer auf, welche einends von der Kolbenstange mit einem Zugang zum Ausgleichsraum, andernends von einer bewegbaren Mittelplatte des Ueberströmventils abgedeckt ist.

Die Mittelplatte trennt die Innenkammer von einer Hauptkammer, welche wiederum durch eine mit zum Arbeitsraum weisenden Durchlassöffnungen versehene festliegende Stirnplatte abgedeckt ist. Zum Halten der Mittelplatte befindet sich zwischen Stirnplatte und Mittelplatte ein Kraftspeicher. Sind im Kolbenkörper die aus dem Stand der Technik bekannten üblichen Ventile zwischen den beiden Arbeitsräumen angeordnet, so arbeitet das Ueberströmventil gleichermassen wie das nach dem 1. Ausführungsbeispiel beschriebene. Bevorzugt sollen hier jedoch weitere Verbesserungen angebracht sein. Einmal ist vorgesehen, dass die Mittelplatte und Stirnplatte von einem Stift durchsetzt sind, welcher einends zur Kolbenstange hin eine den Ausgleichsraum abdichtende Haube oder einen später beschriebenen Stift mit Dichtungsring und/oder kapillaren Spalt trägt. Diese Haube besteht vorzugsweise aus elastischem Gummimaterial. Andernends soll der Stift in den Arbeitsraum hineinragen. Schlägt dieser Stift in Endlage der Kolbenstange am Boden der Dämpferhülse an, verschliesst der Stift die Durchlassöffnung zum Ausgleichsraum und wirkt als hydraulischer Endanschlag. Hierdurch können extreme Stösse in besonderem Masse wirkungsvoll aufgefangen werden. Ist nur eine Gummihaube vorgesehen, dient diese lediglich einer gewissen Transportsicherung.

Zum anderen soll erfindungsgemäss zwischen Kolbenkörper und Dämpferhülse eine Dichtung angeordnet sein, welche gegen die Kraft einer Schraubenfeder verschiebbar ist. Die Schraubenfeder umgibt dabei in den Kolbenkörper eingeformte Kanäle. Diese Kanäle stehen über Bohrungen mit der Innenkammer und in Gebrauchslage, d.h. wenn die Dichtung gegen die Kraft der Schraubenfeder verschoben ist, auch über eine

Aussenkammer sowie Bohrungen mit der Hauptkammer in Verbindung.

Bei dieser Anordnung gelangt bei einem Einfedern der Kolbenstange die Flüssigkeit durch die Durchlassöffnungen aus dem Arbeitsraum in die Hauptkammer, von dort über die Bohrungen in die Aussenkammer. Infolge des Druckes in der Aussenkammer wird die Dichtung angehoben und ein Zugang zu den Kanälen hergestellt. Von den Kanälen gelangt die Flüssigkeit einmal in den oberen Arbeitsraum, aber auch durch weitere Bohrungen in die Innenkammer und von dort in den Ausgleichsraum. Da jedoch letzterer Zugang sehr verengt ist, muss wiederum die Gasdrucksäule nicht in so erheblichem Masse plötzliche Stösse auffangen. Deshalb genügt auch bei dieser Anordnung ein relativ geringer Druck. Beim Ausfedern stehen der Flüssigkeit nur die von den Kanälen zur Innenkammer führenden Bohrungen sowie der Auslass aus dem Ausgleichsraum zur Verfügung.

Einer der wesentlichen weiteren Vorteile der vorliegenden Erfindung besteht in der Anordnung eines Entlüftungsventils in der Kolbenstange. Die Erfahrung hat gezeigt, dass beim Ein- und Ausfedern Gas bzw. Luft in den Arbeitsraum eintreten kann, welches sich sehr störend auf die Dämpfereigenschaft auswirkt. Um dieses Gas bzw. diese Luft aus dem Arbeitsraum wieder in den Ausgleichsraum zurückzuführen, ist erfindungsgemäss in der Kolbenstange ein Entlüftungsventil angeordnet, welches mit einer Ringkammer zur Aufnahme von in die Arbeitsräume gelangtem Gas in Verbindung gebracht werden kann. Dabei besteht das Entlüftungsventil der einfachheithalber aus einer die Kolbenstange querenden Hülse, welche Oeffnungen zum Ausgleichsraum hin aufweist. In der Hülse lagert ein Kraftspeicher, welcher eine Kugel gegen eine Oeffnung in der Kolbenstange presst. Der Kraftspeicher ist so ausgelegt, dass die Betriebsdruckdifferenz zwischen Arbeits- und Ausgleichsraum nicht ausreicht, um die Kugel aus ihrem Sitz zu drücken. Die Ringkammer selbst wird durch eine oberhalb des Arbeitsraumes angeordneten Kolbenstangenführung mit dieser zugeordnetem Anschlagkolben gebildet. Dabei stützt sich der Anschlagkolben durch einen Kraftspeicher in einem Kompensationsraum gegen die Kolbenstangenführung ab. Der Anschlagkolben selbst ist durch eine die Kolbenstange umfassenden Manschette mit angeformtem Kragen verschiebbar ausgebildet. Die Kompensationskammer steht über eine Drosselbohrung mit einem zwischen Anschlagkolben und Kolbenstange gebildeten Spalt in Verbindung. Dieser Spalt hat den weiteren Vorteil, dass die Kugel des Entlüftungsventils beim Vorbeifahren unverrückbar bleibt. Nach dem Vorbeifahren der Kugel wird der Anschlagkolben durch den Kragen und gegen die Kraft des in dem Kompensationsraum lagernden Kraftspeichers gedrückt und das Volumen der Ringkammer verändert. Nach einem kurzen Weg stösst die Kugel an die Kolbenstangenführung und das Ventil wird geöffnet, sodass das in der Ringkammer befindliche Gas wieder in den Ausgleichsraum gelangen kann. Gleichzeitig gelangt auch Flüssigkeit aus der Kompensationskammer durch die Drosselbohrung in den Spalt und von dort in das Entlüftungsventil.

Als weitere Verbesserung der Erfindung ist am Boden der Dämpferhülse ein Dorn angeordnet, welcher in den Arbeitsraum einragt. In Endlage der Kolbenstange verschliesst dieser Dorn den Ausgleichsraum bzw. den Zugang zum Ausgleichsraum. Zum Zwecke einer besseren Abdichtung zwischen Dorn und Kolbenstange soll an dem Dorn eine Ringdichtung angeordnet sein. Weiterhin ist vorgesehen, dass der Dorn einen sich bis zu einer Kapillare verengenden Spalt aufweist, welcher die Menge der in den Ausgleichsraum eindringenden Flüssigkeit im Zuge der Bewegung verringert. Auch hierdurch ergibt sich eine zusätzliche Dämpfungsmöglichkeit, insbesondere bei extremer Einfederung.

Erfindungsgemäss ist weiterhin zum besseren Transport des Stossdämpfers vorgesehen, dass die Kolbenstange über einen Einsatz bajonettartig am Boden der Dämpferhülse festgelegt werden kann. Hierzu sind dem Einsatz Lappen angeformt, welche eine Flügelöffnung einer in der Dämpferhülse festliegenden Stossplatte durchgreifen und nach einer Drehung von einem Gummikissen klemmend an die Unterseite der Stossplatte angepresst werden. Beim Einbau des Stossdämpfers wird die Kolbensange durch eine einfache Drehung gelöst. Die Lappen weisen bevorzugt Sollknickstellen auf. über welche beim Gebrauch der Lappen abbiegen, um eine Störung des Betriebes zu vermeiden.

Als weiteres Merkmal der Erfindung ist vorgesehen, dass der Ausgleichsraum jenseits des Ueberströmventils bzw. des Kolbens von einem Füll- und Regelventil verschlossen ist. Dieses Füll- und Regelventil besteht der Einfachheit halber aus einer eine Oeffnung in einer Platte verschliessenden gegen die Kraft eines Kraftspeichers bewegbaren Kugel. Hierdurch ist es möglich, den Stossdämpfer ohne Beaufschlagung mit Druckgas zu transportieren. Das heisst, die Kolbenstange ist gänzlich in die Dämpferhülse eingeschoben, was sich platzsparend auswirkt. Erst beim oder nach dem Einbau wird der Ausgleichsraum aus einem Druckspeicher beispielsweise einer einfachen Druckgaspackung, mit Gasdruck beaufschlagt. Sollte im Laufe des Gebrauchs des Stossdämpfers Gas aus dem Ausgleichsraum verloren gehen, so ist jederzeit ein Nachfüllen möglich. Dadurch wird die Lebensdauer des Stossdämpfers erhöht. Ausserdem ermöglicht dieser dosierbare Gasdruck eine Anpassung des Dämpfers an die Betriebsverhältnisse des jeweiligen Fahrzeugs.

Insgesamt weist der erfindungsgemässe Stossdämpfer wenig Einbauteile auf und demenstsprechend ein geringeres Gewicht. Infolge der Verlagerung des Ausgleichsraumes in die hohle Kolbenstange entfällt der doppelwandige Mantel des Stossdämpfers. Bei gleichbleibendem äusseren Durchmesser ergibt sich hieraus eine Vergrösserung eer wirksamen Kolbenfläche, eine verbessserte Kühlung und erfordert geringere Fertigungstoleranzen. Daraus resultiert wiederum eine längere Lebensdauer oder aber die Möglichkeit der Verwendung billigerer Bauteile. Weiterhin resultiert daraus eine grössere Steifigkeit des gesamten Stossdämpfers.
Seine Merkmale gestatten auch die Verwirklichung einer bestimmten Dämpferleistung mit einem im Vergleich zu bekannten Stossdämpfern verkleinerten äusseren Durchmesser. Dadurch ist es möglich, diesen Dämpfer trotz seiner Kompaktheit für grössere bzw. schwerere Fahrzeugtypen als Stossdämpfer oder als Federbeineinsatz zu verwenden.

Ausserdem ist bei einer gegebenen Baulänge der benützbare Arbeitshub des Kolbens grösser als bei bekannten Stossdämpfern.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 einen erfindungsgemässen Stossdämpfer, teilweise im Längsschnitt dargestellt;

Fig. 2 einen vergrösserten Ausschnitt aus Fig. 1 in Gebrauchslage;

Fig. 3 den Ausschnitt nach Fig. 2 in einer anderen Gebrauchslage;

Fig. 4 einen vergrössert dargestellten Querschnitt durch ein Füll- und Regelventil nach Fig. 1;

Fig. 5 einen vergrössert dargestellten Querschnitt aus dem Bodenbereich eines Stossdämpfers in einer speziellen Ausführungsform;

Fig. 6 einen vergrössert dargestellten Ausschnitt aus Fig. 1 im Bereich eines Ueberströmventils;

Fig. 7 einen Querschnitt durch ein weiteres Ausführungsbeispiel einer Ventilanordnung im Bereich nach Fig. 6;

Fig. 8 einen Querschnitt durch ein weiteres Ausführungsbeispiel einer Ventilanordnung im Bereich nach Fig. 6.

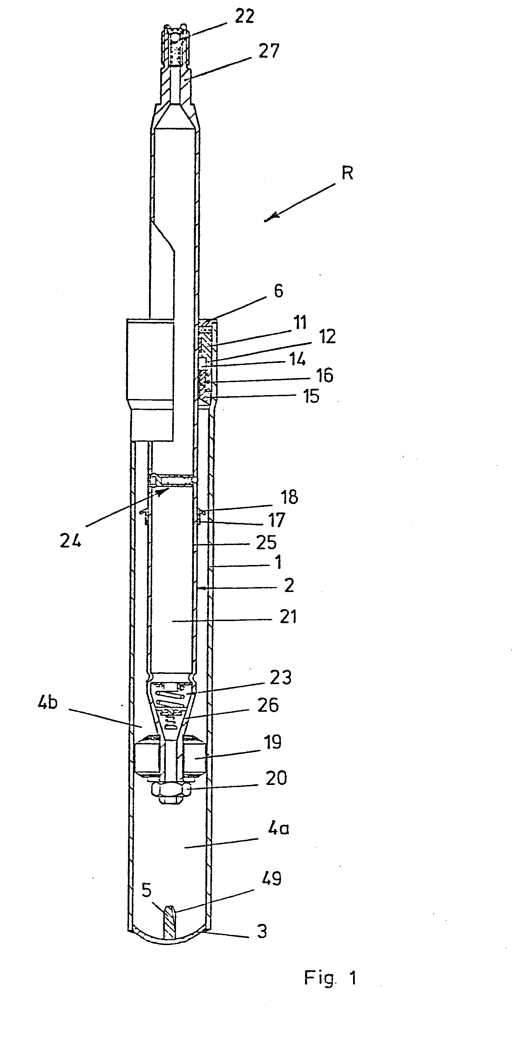

Bei einem Stossdämpfer R nach Fig. 1 ist in einer Dämpferhülse 1 eine Kolbenstange 2 bewegbar gelagert. Die Dämpferhülse 1 wird einerseits von einem Schalenboden 3 mit einem
in einen Arbeitsraum 4a einragenden Dorn 5, andererseits
von einem Deckel 6 abgeschlossen, wobei der Deckel 6 von
der Kolbenstange 2 durchsetzt ist.

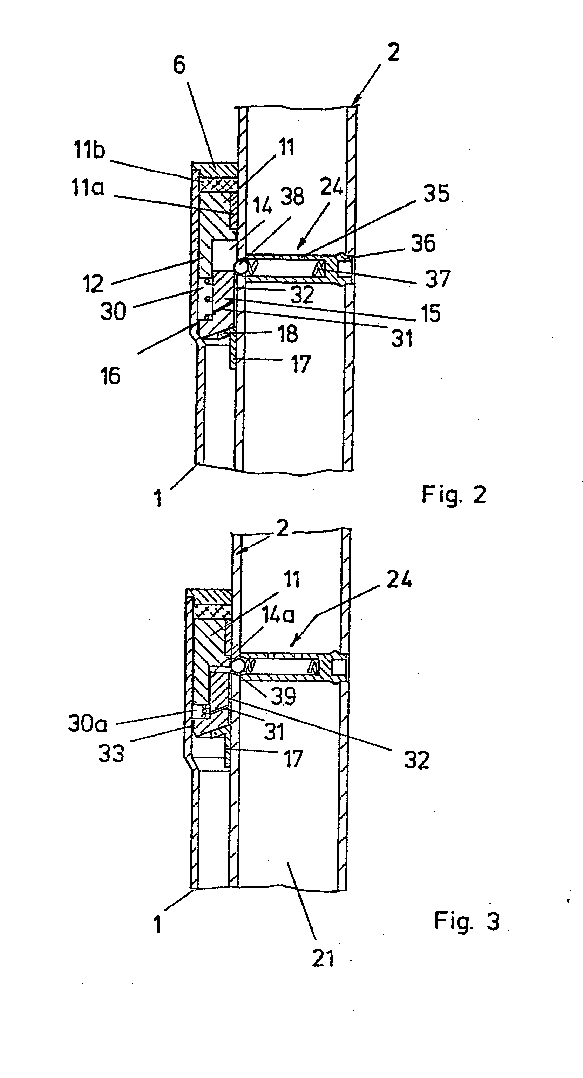

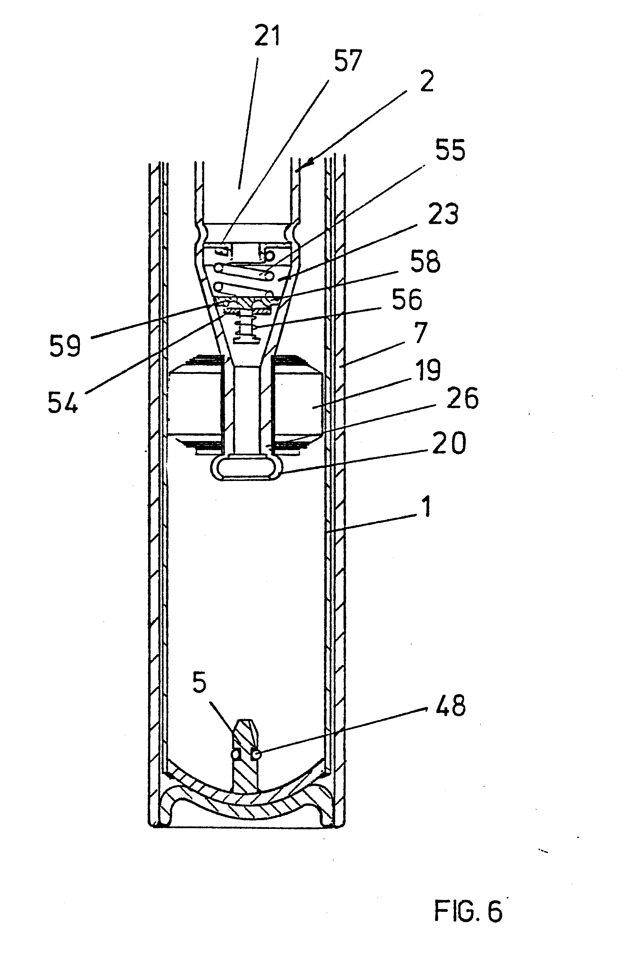

In der Dämpferhülse 1 befindet sich unterhalb des Deckels 6
angeordnet eine Kolbenstangenführung 11mit einer Führungsbüchse 11a und einer Abdichtung 11b (Fig. 2). Zwischen der
Kolbenstange 2 und einer Nase 12 formt die Kolbenstangenführung eine Ringkammer 14 aus, deren Volumen durch einen
Anschlagkolben 15 gegen einen Kraftspeicher 16 veränderbar
ist. Dies kann durch eine um die Kolbenstange 2 angeordnete
Manschette 17 mit Kragen 18 erfolgen. Eine weitere Führung
der Kolbenstange 2 erfolgt durch einen Kolben 19, welcher
die Kolbenstange 2 umfängt und durch eine Mutter 20
od.dgl. gesichert ist (Fig. 6).

Die Kolbenstange 2 besteht aus einem Rohr 25, dessen Innenraum als Ausgleichsraum 21 dient. Beidends weist dieses
Rohr Einschnürungen 26 und 27 auf, wobei die Einschnürung
26 zum Arbeitsraum 4a hin bis zu einem Ueberströmventil 23
offen und die gegenüber liegende ausserhalb der Dämpferhülse 1 angeordnete Einschnürung 27 von einem Füll- und Regelventil 22 besetzt ist. Zwischen den beiden Ventilen 22 und
23 ist der Ausgleichsraum 21 von einem Entlüftungsventil 24
durchsetzt.

Der Arbeitsraum 4a steht über -- nicht dargestellte übliche -- Ventile im Kolben 19 mit einem Arbeitsraum 4b in Verbindung, wobei beide im wesentlichen mit Dämpferflüssigkeit, gefüllt sind. Der Ausgleichsraum 21 ist dagegen mit Gas beaufschlagt, das auf die Flüssigkeitssäule drückt.

Beim Einfedern wird die Kolbenstange 2 in der Dämpferhülse 1 in Richtung zum Schalenboden 3 hinbewegt. Dabei strömt Flüssigkeit aus dem Arbeitsraum 4a durch die Ventile im Kolben 19 in den Arbeitsraum 4b. Die dem eintauchenden Volumen der Kolbenstange 2 entsprechende Flüssigkeitsmenge muss dabei jedoch einen anderen Weg finden. Sie wird gegen das Ueberströmventil 23 gedrückt und gelangt durch dieses in den Ausgleichsraum 21.

Beim Ausfedern entsteht im Arbeitsraum 4b ein Ueberdruck. Die hauptsächliche Flüssigkeitsmenge wird durch das die Zugdämpfung bewirkende Ventil im Kolben 19 gedrückt, während sich das Ueberströmventil 23 im Zughub relativ schnell öffnet und einen grossen Durchflussquerschnitt freigibt, damit die Dämpferflüssigkeit ohne grossen Widerstand aus dem Ausgleichsraum 21 in den Arbeitsraum 4a nachfliessen kann.

Bei diesem erfindungsgemässen Stossdämpfer ist demnach die Gasfüllung im Ausgleichsraum 21 nicht durch beispielsweise eine Trennwand von der Flüssigkeitsfüllung vollständig abgetrennt. Deshalb müssen Vorkehrungen getroffen sein, um evt. aus dem Ausgleichsraum 21 in den Arbeitsraum 4a eingetretendes Gas wieder in den Ausgleichsraum 21 zurückzuführen. Hierzu dient einemal das Entlüftungsventil 24, sowie die in Fig. 2 und 3 näher dargestellte Einrichtung, u.a. aus Kolbenstangenführung 11, Ringkammer 14, Anschlagkolben 15, Kraftspeicher 16 und Manschette 17 mit Kragen 18. Dabei befindet sich der Kraftspeicher 16 in einem ringförmigen Kompensationsraum 30. Der Anschlagkolben 15 ist von zumindest einer Drosselbohrung 31 durchsetzt und bildet zwischen sich und der Kolbenstange 2 einen Spalt 32, sowie zwischen sich und der Dämpferhülse 1 einen Durchlass 33.

Das Entlüftungsventil 24 besteht aus einer den Ausgleichsraum 21 in der Kolbenstange durchsetzenden mit Bohrungen 35 versehenen Hülse 36, welche einen Kraftspeicher 37 umgibt. der eine Kugel 38 gegen ein Loch 39 in der Kolbenstangenwand drückt.

Ist kein Gas in die Arbeitsräume 4a bzw. 4b gelangt, so sind auch die Ringkammer 14 und der Kompensationsraum 30 mit Flüssigkeit gefüllt. Beide letztgenannten Räume 14 bzw. 30 wirken dann als hydraulische Anschläge.

Befindet sich jedoch angesaugtes Gas bzw. Luft im Arbeitsraum 4a, gelangt es wegen des Auftriebs durch die Ventile im Kolben 19 in den Arbeitsraum 4b und sammelt sich in der Ringkammer 14. Beim Ausfedern der Achse bzw. bei dem entsprechenden Zughub drückt nun der Anschlagkolben 15 gegen das Gaspolster in der Ringkammer 14, wobei dieser Bewegung der Kraftspeicher 16 und gegebenenfalls die Füllung des Kompensationsraumes 30 entgegenwirkt. Dies kann durch die Auslegung des Kraftspeichers 16 sowie durch die Drosselbohrung 31 und den Spalt 32 gesteuert werden. Das Entlüftungsventil 24 tritt noch nicht in Kraft, da der Spalt 32 so gewählt ist, dass die Kugel 38 ungehindert daran vorbeigleiten kann. Erst bei extremem Hub, z.B. beim Anheben des ganzen Fahrzeuges, stösst der Kragen 18 der Manschette 17 an den Anschlagkolben 15 und der Kompensationsraum 30a wird über die Drosselbohrung 31 bzw. dem Durchlass 33 entleert. Gleichzeitig wird die Ringkammer 14 komprimiert (s, Fig. 3, 14a). Nach einem bestimmten Bewegungsweg trifft die Kugel 38 auf die Kolbenstangenführung 11, wodurch das Entlüftungsventil 24 geöffnet wird. Das in der Ringkammer 14 eingeschlossene Gas entspannt sich in den Ausgleichsraum 21.

Das Füll- und Regelventil 22 in der Einschnürung 27 besteht aus einer Kugel 42, welche von einem Kraftspeicher 43 gegen eine Oeffnung 44 einer Platte 45 gedrückt wird. Diese Kugel 42 kann z.B. von einem -- nicht dargestellten -- Einfüllstutzen einer Gaspatrone weggedrückt und so der Ausgleichsraum 21 mit Gas beaufschlagt werden.

Zum Transport soll erfindungsgemäss der Ausgleichsraum 21 noch nicht oder nur geringfügig unter Gasdruck stehen. Die Kolbenstange 2 ist gänzlich in die Dämpferhülse eingeschoben. Dabei ist der Dorn 5 in die offene Einschnürung 26 eingeführt und dichtet diesen soweit ab, dass in jeder Transportlage des Stossdämpfers R kein Gas bzw. Luft aus dem Ausgleichsraum 21 in den Arbeitsraum 4a gelangen kann. Zur Verbesserung der Abdichtung ist an dem Dorn 5 eine elastische Ringdichtung 48 angeordnet (Fig. 6). Dem Dorn 5 ist weiterhin ein sich bis zu einer Kapillare verengender Spalt 49 eingeformt, welcher als weiteres stossdämpfendes Ventil bei extremer Einfederung der Kolbenstange wirkt, da er die Durchflussmenge der Flüssigkeit in die Einschnürung 26 der Kolbenstange 2 verringert.

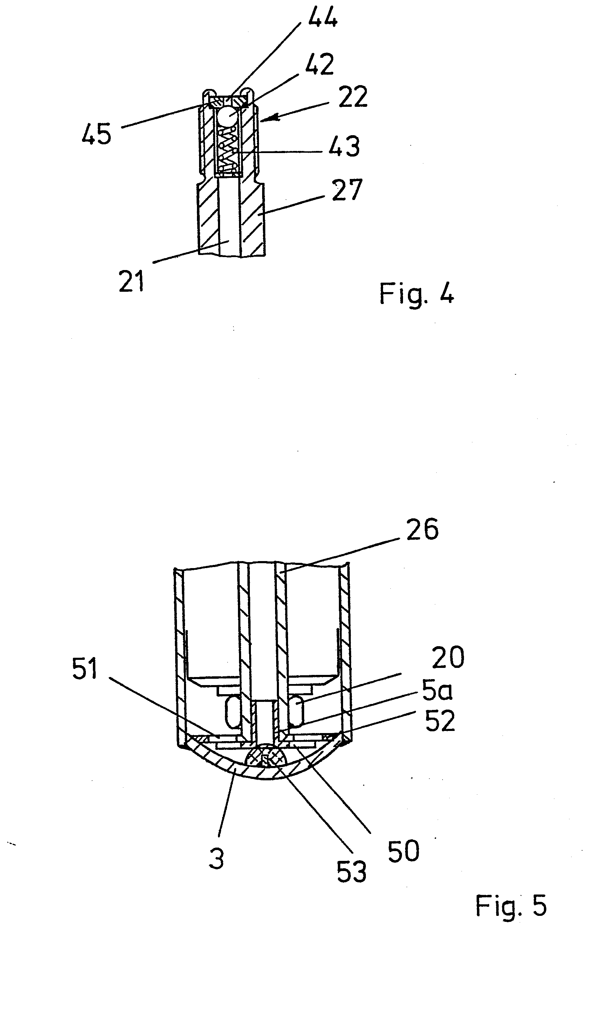

Fig. 5 zeigt eine weitere Möglichkeit der Festlegung der Kolbenstange 2 beim Transport des Stossdämpfers. Dabei sitzt in der Kolbenstange ein Einsatz 5a. Von diesem kragen seitlich zwei Lappen 50 ab, welche beim Einschieben der Kolbenstagne 2 eine Flügelöffnung 51 einer am Schalenboden 3 festgelegten Stossplatte 52 durchgreifen. Durch Drehen nach Art eines Bayonett-Verschlusses untergreifen die Lappen 50 die Stossplatte 52, wobei sie von einem Gummikissen 53 oder dgl. an diese angepresst werden. Zum Einbau des Stossdämpfers R in ein Fahrzeug wird dieser Bayonett-Verschluss durch einfache Drehung gelöst.

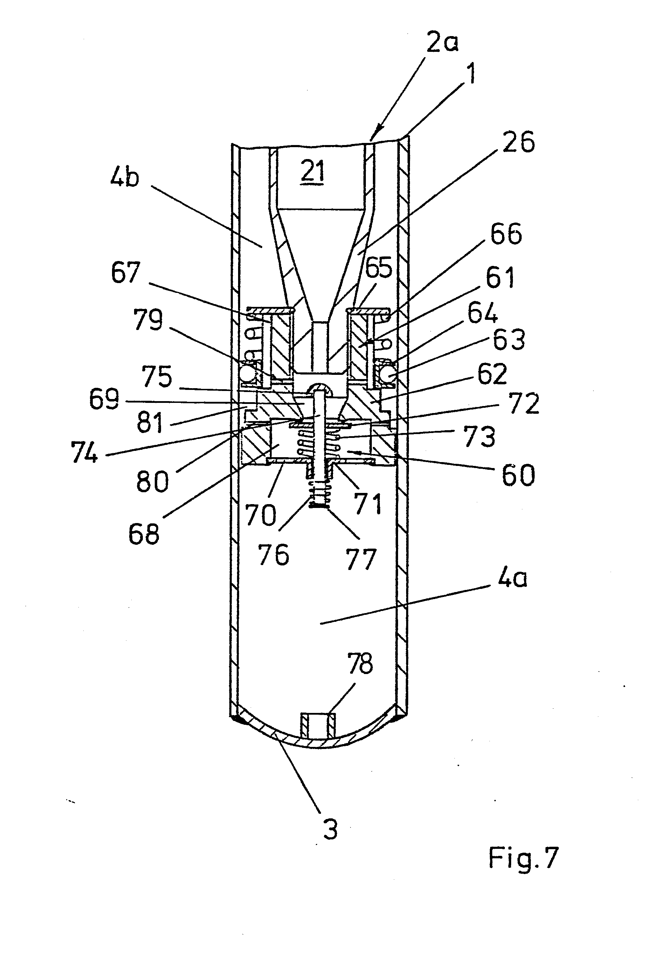

Das Ueberströmventil 23 weist gemäss Fig. 6 zwei Kraftspeicher 55 und 56 auf, wobei sich der eine Kraftspeicher 55, relativ stark ausgebildet, einerseits gegen eine Lochplatte 57 zum Ausgleichsraum 21 hin, andererseits gegen eine Ventilplatte 58 abstützt. Während die Lochplatte 57 festliegt, ist die Ventilplatte 58 beweglich gehalten und bildet zur Innenwand des Kolbens 2 -- nicht dargestellte -- Zwischenräume, durch welche bei geringer oder langsamer Kolbenbewegung die Flüssigkeit hindurchfliessen kann, ohne dass das ganze Ventil betätigt werden muss. Bohrungen 59 in der Ventilplatte 58 werden von einer Scheibe 54 abgedeckt. Diese ruht auf dem zweiten Kraftspeicher 56, welcher im Verhältnis zum ersten kraftspeicher 55 schwächer ausgebildet ist. Bei einer Ventilanordnung nach Fig. 7 ist ein Ueberströmventil 60 Teil eines einer Kolbenstange 2a aufgeschraubten Kolbens 61. Dieser weist einen Kolbenkörper 62 auf, welcher über eine Dichtung 63 in einem Gehäuse 64 der Dämpferhülse anliegt. Zwischen dem Gehäuse 64 und einer Deckplatte 65 ist eine Schraubenfeder 66 od.dgl. angeordnet, welche Kanäle 67 überfährt.

Der Kolbenkörper 62 weist weiterhin stirnseitig übereinander angeordnete Kammern 68 und 69 auf, wovon die äussere Hauptkammer 68 durch eine festliegende, mit Durchflussöffnungen 70 versehene Stirnplatte 71 abgedeckt ist, während eine Innenkammer 69 die Hauptkammer 68 mit dem Ausgleichsraum 21 in der Kolbenstange 2a verbindet. Der Uebergang von Hauptkammer 68 zu Innenkammer 69 wird durch eine Mittelplatte 72 überdeckt, welche gegen einen Kraftspeicher 73 bewegbar ist, der sich andernends gegen die Stirnplatte 71 abstützt. Beide Platten werden von einem Stift 74 durchsetzt, welcher einends von einer Gummihaube 75 verhüllt, andernends von einer Schraubenfeder 76 umgeben ist, welche sich zwischen einer Kopfscheibe 77 und der Stirnplatte 71 befindet. Wird die Kolbenstange 2a in Richtung Schalenboden 3 bewegt, greift der Stift 74 in eine Führungshülse 78 ein und die Gummihaube 75 verschliesst den Ausgleichsraum 21. Diese Führungshülse 78 dient insbesondere als Transportrückhaltevorrichtung.

Die Innenkammer 69 steht sowohl mit dem Ausgleichsraum 21 als auch über Bohrungen 79 im Kolbenkörper 62 mit den Kanälen 67 in Verbindung. Weitere Bohrungen 80 verbinden die Hauptkammer 68 mit einer Aussenkammer 81, deren Volumen durch Verschieben des Gehäuses 64 verändert werden kann, wobei auch eine Verbindung zwischen Aussenkammer 81 und Kanäle 67 hergestellt wird. Im übrigen dichtet die Mittelplatte 72 die Oeffnung zwischen Innenkammer 69 und Hauptkammer 68 nicht vollständig ab, sondern erlaubt bei geringer Kolbenbewegung einen Durchfluss von Flüssigkeit ohne Ventilbetätigung.

Federt die Kolbenstange 2a mit dem Kolben 61 ein, fliesst Flüssigkeit von dem Arbeitsraum 4a durch die Durchlassöffnung 70 in die Hauptkammer 68, von dort durch die Bohrungen 80 in die Aussenkammer 81. Das Dichtungsgehäuse 64 wird gegen die Kraft der Schraubenfeder 66 verschoben und gibt einen Durchlass zu den Kanälen 67 und damit zum Arbeitsraum 4b frei. Ueberschüssige Flüssigkeitsmenge wird durch die Bohrungen 79 in die Innenkammer 69 und von dort in den Ausgleichsraum 21 gedrückt.

Beim Ausfedern kann aus dem Arbeitsraum 4b die Flüssigkeit nur durch die Bohrungen 79 in den Innenraum 69 gelangen. Durch den Ueberdruck im Arbeitsraum 4 b wird die Mittelplatte 72 abgehoben und gibt den direkten Weg zur Hauptkammer 68 und durch die Durchlassöffnungen 70 zum Arbeitsraum 4a frei.

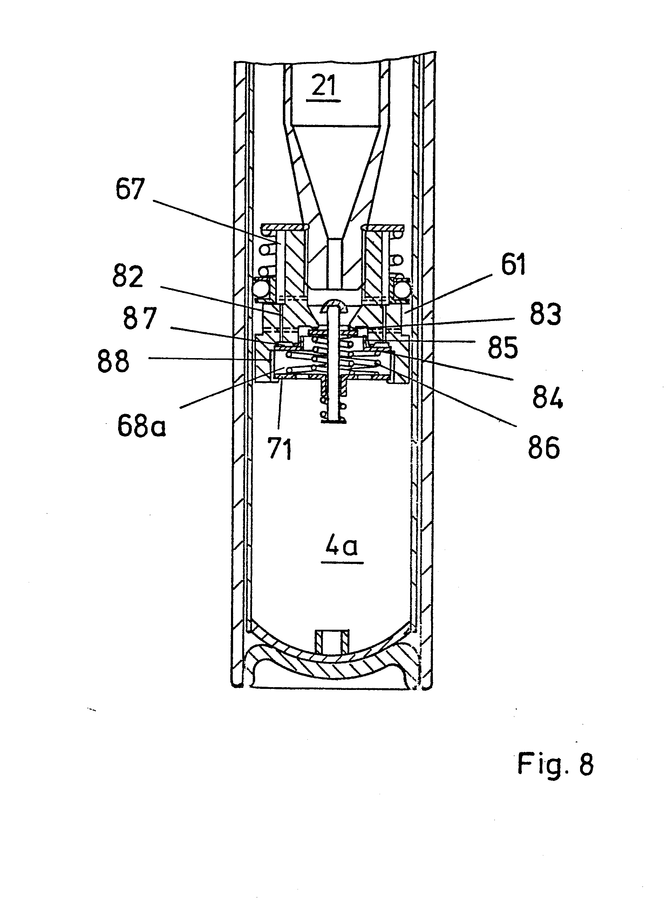

Fig. 8 zeigt eine weitere Ausgestaltung der Ventilanordnung im Kolben 61. Der Unterschied zu der in Fig. 7 dargestellten Anordnung besteht in einer direkten Verbindung der Kanäle 67 mit einer Hauptkammer 68a über Bohrungen 82. Dabei ist die Hauptkammer 68 a in einen Bereich mit einem grösseren Durchmesser und über eine schulterartigen Absatz 83 in einen Bereich mit kleinerem Durchmesser unterteilt. Diesem schulterartigen Absatz 83 liegt eine Ringscheibe 84 mit

Innenkragen 85 an, wobei sich eine Schraubenfeder 86 einends gegen diese Ringscheibe 84 und andernends gegen die Stirnplatte 71 abstützt. Diese Ringscheibe 84 liegt dem Absatz 83 so an, dass sie den Uebertritt von Flüssigkeit durch die Bohrungen 82, eine Ringkammer 87 sowie der Uebersichtlichkeit halber nicht dargestellte Kanäle in dem Absatz 83 zulässt. Weiterhin ist auch die Innenwand der Hauptkammer 68a im Bereich mit dem grösseren Durchmesser von Randkanälen 88 durchzogen. Da der Abstand zwischen Innenkragen 85 und Innenwand der Hauptkammer 68a auch beim Abheben der Ringschiebe 84 vom Absatz 83 gleich bleibt, kann gerade durch diese Randkanäle 88, deren Zugang beim Abheben der Ringscheibe 84 freigegeben wird, die Durchflussmenge der Flüssigkeit erhöht und reguliert werden. Durch diese Anordnung wird die Zugstufe des Stossdämpfers feiner regulierbar, während die Druckstufe unverändert wie in Fig. 7 bleibt.

Patentansprüche

————————— —————————

1. Stossdämpfer mit einem an einer Kolbenstange in einer Dämpferhülse führbaren Kolben, welcher zwei von ihm gebildete und mit Flüssigkeit gefüllte Arbeitsräume in der Dämpferhülse über Ventile, Drosselbohrungen od.dgl. verbindet, wobei die Kolbenstange einen Ausgleichsraum aufweist, der mit Druck beaufschlagbar ist,

   dadurch gekennzeichnet,

   dass zwischen dem Ausgleichsraum (21) und dem unteren Arbeitsraum (4a) ein Ueberströmventil (23, 60) angeordnet ist.

2. Stossdämpfer nach Anspruch 1, dadurch gekennzeichnet, dass das Ueberströmventil (23) in einer Einschnürung (26) der Kolbenstange (2) sitzt und eine den Ausgleichsraum (21) begrenzende, festliegende Lochplatte (57) aufweist, gegen die sich jenseits des Ausgleichsraumes (21) ein erster Kraftspeicher (55) mit einem hohen Druckwiderstand abstützt, dem eine Ventilplatte (58) mit Bohrungen (59) bewegbar anliegt, welche von einer gegen die Kraft eines zweiten Kraftspeichers (56) abhebbaren Scheibe (54) abgedeckt sind.

3. Stossdämpfer nach Anspruch 1, dadurch gekennzeichnet, dass das Ueberströmventil (60) in einem Kolbenkörper (62) des Kolbens (61) angeordnet ist, wobei der Kolbenkörper (62) eine Innenkammer (69) aufweist, welche einends von der Kolbenstange (2a) mit einem Zugang zum Ausgleichsraum (21), andernends von einer bewegbaren Mittelplatte (72) des Ueberströmventils (60) abgedeckt ist, an die eine Hauptkammer (68) in dem Kolbenkörper (62) anschliesst, welche durch eine mit zum Arbeitsraum (4a) weisenden Durchlassöffnungen (70) versehene festliegende Stirnplatte (71) abgedeckt ist, wobei zwischen Stirnplatte (71) und Mittelplatte (72) ein Kraftspeicher (73) angeordnet ist.

4. Stossdämpfer nach Anspruch 3, dadurch gekennzeichnet, dass die Mittelplatte (72) und/oder die Stirnplatte (71) von einem Stift (74) durchsetzt ist/sind, welcher einends zur Kolbenstange (2a) hin eine den Ausgleichsraum (21) abdichtende Haube (75) trägt, andernends in den Arbeitsraum (4a) hineinragt, wobei eine Kopfscheibe (77) von einer Schraubenfeder (76) gegen die Stirnplatte (71) abstützbar ist und der Stift (74) in Endlage der Kolbenstange (2a) in eine Bodenhülse (78) eingreift, bzw. einem Schalenboden (3) der Dämpferhülse (1) aufsitzt und in dieser Lage den Ausgleichsraum (21) verschliesst.

5. Stossdämpfer nach einem der Ansprüche 3 oder 4, dadurch gekennzeichnet, dass zwischen Kolbenkörper (62) und Dämpferhülse (1) eine Dichtung (63, 64) angeordnet ist, welche gegen die Kraft einer Schraubenfeder (66) verschiebbar ist, wobei die Schraubenfeder (66) in den Kolbenkörper (62) eingeformte Kanäle (67) umgibt, und dass die Kanäle (67) über Bohrungen (79) mit der Innenkammer (69) und in Gebrauchslage auch über eine Aussenkammer (81) sowie Bohrungen (80) mit der Hauptkammer (68) in Verbindung stehen und zusätzlich über weitere
Bohrungen (82) direkt mit der Hauptkammer (68a) in Verbindung stehen.

6.  Stossdämpfer nach Anspruch 5, dadurch gekennzeichnet,
    dass die Hauptkammer (68a) in zwei Bereiche durch Bildung eines Absatzes (83) aufgeteilt ist, wobei sich gegen diesen Absatz (83) eine Ringscheibe abstützt, welche jedoch einen Durchlass der Flüssigkeit von der Bohrung (82) durch eine Ringkammer (87) sowie in dem Absatz (83) vorgesehene Durchlässe zu der Hauptkammer
    (68a) gewährt, und dass an der Innenwand der Hauptkam-
    mer (68a) Randkanäle (88) angeordnet sind, welche nach
    dem Abheben der Ringscheibe (84) in direkter Verbindung
    zur Ringkammer (87) stehen.

7.  Stossdämpfer nach wenigstens einem der Ansprüche 1 bis
    6, dadurch gekennzeichnet, dass in der Kolbenstange (2,
    2a) ein Entlüftungsventil (24) angeordnet und diesem
    oberhalb des Arbeitsraumes (4b) eine Ringkammer (14)
    zur Aufnahme von in die Arbeitsräume (4a bzw. 4b) gelangtem Druckgas zugeordnet ist.

8.  Stossdämpfer nach Anspruch 7, dadurch gekennzeichnet,
    dass die Ringkammer (14) von einer festliegenden Kolbenstangenführung (11) sowie einem Anschlagkolben (15)
    gebildet ist, wobei die Kolbenstangenführung (11) gegen
    den Anschlagkolben (15) von einem in einem Kompensationsraum (30) angeordneten Kraftspeicher (16) abgestützt
    ist, und dass eine Drosselbohrung (31) in dem Anschlagkolben (15) den Kompensationsraum (30) mit einem zwischen Anschlagkolben (15) und der Kolbenstange (2, 2a) gebildeten Spalt verbindet, wobei der Anschlagkolben (15) von einem Kragen (18) einer die Kolbenstange (2, 2a) umfangenden Manschette (17) bewegbar und das Entlüftungsventil (24) durch die Kolbenstangenführung (11) öffenbar ist.

9. Stossdämpfer nach wenigstens einem der Ansprüche 1 bis 8, dadurch gekennzeichnet, dass am Boden (3) der Dämpferhülse (1) ein Dorn (5) in den Arbeitsraum (4a) einragt, welcher in Endlage der Kolbenstange (2) den Ausgleichsraum (21) verschliesst.

10. Stossdämpfer nach Anspruch 9, dadurch gekennzeichnet, dass der Dorn einen sich zu einer Kapillare verengenden Spalt (49) aufweist.

11. Stossdämpfer nach einem der Ansprüche 9 oder 10, dadurch gekennzeichnet, dass die Kolbenstange (2) einen Einsatz (5a) aufnimmt, welchem Lappen (50) angeformt sind, welche eine Flügelöffnung (51) einer in der Dämpferhülse (1) festliegenden Stossplatte (52) durchgreifen und nach einer Drehung von einem Gummikissen (53) klemmend haltbar sind.

12. Stossdämpfer nach wenigstens einem der Ansprüche 1 bis 11, dadurch gekennzeichnet, dass der Ausgleichsraum (21) jenseits der Einschnürungen (26) von einem Füll- und Regelventil (22) verschlossen ist, welches aus einer eine Oeffnung (44) in einer Platte (45) verschliessenden gegen die Kraft eines Kraftspeichers (43) bewegbaren Kugel (42) besteht.

Fig. 1

Fig. 2

Fig. 3

Fig. 4

Fig. 5

0133157

FIG. 6

Fig. 7

Fig. 8